# EUROPÄISCHE PATENTANMELDUNG

(11) **EP 4 850 950 A1**
(43) Veröffentlichungstag der Anmeldung: **09.12.2026**
(21) Anmeldenummer: 26182768.7
(22) Anmeldetag: 03.06.2026
(51) Int. Cl.: B60K 1/04, B60L 50/64, B62D 21/15, H01M 50/242

(54) **HOCHVOLT-BATTERIE-ANORDNUNG FÜR EIN FAHRZEUG**

(30) Priorität: 04.06.2025 DE 102025121731
(71) Anmelder: Volkswagen Aktiengesellschaft, 38440 Wolfsburg (DE)
(72) Erfinder: Hagen, Stefan, 38440 Wolfsburg (DE); Söhnel, Holger, 38440 Wolfsburg (DE); Hentrich, Dr. Manuel, 38440 Wolfsburg (DE); Bulsink, Rogier, 38440 Wolfsburg (DE); Janßen, Werner, 38440 Wolfsburg (DE)

(57) **Zusammenfassung**

Die Offenbarung betrifft eine Hochvolt-Batterie-Anordnung (10) für ein Fahrzeug, umfassend zumindest vier Batteriemodul-Stacks (11, 12, 13, 14), zwei Seitenschweller (15, 16),
ein Bodenelement (17) und ein Deckelelement (18), wobei die zumindest vier Batteriemodul-Stacks (11, 12, 13, 14) parallel zueinander in Längsrichtung (30) zwischen den zwei Seitenschwellern (15, 16), dem Bodenelement (17) und dem Deckelelement (18) so angeordnet sind, dass ein Deformationsfreiraum (19) mittig zwischen den
zwei Seitenschwellern (15, 16) zur Absorbierung einer Deformationsenergie gebildet wird.

## Beschreibung

Die Offenbarung betrifft eine Hochvolt-Batterie-Anordnung für ein Fahrzeug sowie ein Fahrzeug mit einer solchen Hochvolt-Batterie-Anordnung.

Hochvolt-Batterie-Anordnungen für Fahrzeuge, insbesondere für Elektrofahrzeuge, sind aus dem Stand der Technik grundsätzlich bekannt. Die Hochvolt-Batterie-Anordnungen werden in der Regel eingehaust. Die Einhausung umfasst in der Regel neben einem Deckel und einem Boden umlaufende Seitenwände, beispielsweise Schweller und Begrenzungswände im vorderen und hinteren Bereich. Ferner sind in der Regel Zwischenwände in Querrichtung des Fahrzeugs innerhalb der Einhausung angeordnet. Die Zwischenwände in Querrichtung sind für das Crash-Verhalten vorteilhaft, da sie Lasten aufnehmen und so die Verformungen einzelner Batteriemodule einzelner Batteriemodul-Stacks der Hochvolt-Batterie verhindern. Die Zwischenwände in Querrichtung benötigen jedoch Bauraum, der nicht mit Batteriemodulen belegt werden kann. Somit kann bei gegebenen geometrischen Abmessungen aktuell nicht die bestmögliche Packungsdichte für die Hochvolt-Batterie-Anordnung erzielt werden.

Aus der DE 10 2018 202 191 A1 ist ein Kraftfahrzeug mit mehreren Batteriemodulen bekannt. Aus der EP 3412486 A1 ist eine Struktur zur Befestigung von Batterien in Fahrzeugen bekannt. Aus der DE 10 2011 051 698 A1 ist eine Bodenstruktur für ein Fahrzeug bekannt.

In diesem Zusammenhang hat sich nun herausgestellt, dass ein Bedarf besteht, eine Hochvolt-Batterie-Anordnung für ein Fahrzeug bereitzustellen, die eine hohe Packungsdichte bei gleichzeitig guter Seitencrashperformance ermöglicht.

Es ist Aufgabe der vorliegenden Offenbarung, die oben beschriebenen Nachteile bei einer Hochvolt-Batterie-Anordnung für ein Fahrzeug zu beheben oder zumindest teilweise zu beheben. Insbesondere ist es Aufgabe der vorliegenden Offenbarung, eine Hochvolt-Batterie-Anordnung für ein Fahrzeug bereitzustellen, die eine hohe Packungsdichte bei gleichzeitig guter Seitencrashperformance ermöglicht.

Die voranstehende Aufgabe wird durch die Patentansprüche gelöst. Insbesondere wird die Aufgabe durch eine Hochvolt-Batterie-Anordnung für ein Fahrzeug mit den Merkmalen des unabhängigen Anspruchs 1 gelöst. Ferner wird die Aufgabe durch ein Fahrzeug mit den Merkmalen des unabhängigen Anspruchs 11 gelöst.

Dabei gelten Merkmale, die im Zusammenhang mit der Hochvolt-Batterie-Anordnung beschrieben sind, selbstverständlich auch im Zusammenhang mit dem Fahrzeug und jeweils umgekehrt, sodass bezüglich der Offenbarung zu den einzelnen Aspekten stets wechselseitig Bezug genommen wird beziehungsweise werden kann.

Gemäß einem ersten Aspekt der vorliegenden Offenbarung wird eine Hochvolt-Batterie-Anordnung für ein Fahrzeug bereitgestellt, umfassend zumindest vier Batteriemodul-Stacks, zwei Seitenschweller, ein Bodenelement und ein Deckelelement, wobei die zumindest vier Batteriemodul-Stacks parallel zueinander in Längsrichtung zwischen den zwei Seitenschwellern, dem Bodenelement und dem Deckelelement so angeordnet sind, dass ein Deformationsfreiraum mittig zwischen den zwei Seitenschwellern zur Absorbierung einer Deformationsenergie gebildet wird.

Der Begriff Batteriemodul-Stack meint vorliegend eine Vielzahl einzelner Batteriemodule, die zu einem Paket verbunden sind. Ein Batteriemodul kann vorzugsweise eine prismatische Geometrie aufweisen. Ein Batteriemodul kann vorliegend zumindest eine Zelle umfassen. Die Zelle kann vorliegend vorzugsweise eine Pouch-Zelle umfassen. Alternativ kann die Zelle eine Rundzelle umfassen. Der Batteriemodul-Stack kann vorzugsweise an einem oder mehreren Aufnahmeelementen beispielsweise durch eine Verklebung montiert bzw. befestigt werden. Die Aufnahmeelemente können an Schweller und/oder Bodenelement angeordnet sein. Die Aufnahmeelemente können beispielsweise Leisten umfassen, die an der Innenseite des Seitenschwellers oder am Bodenelement angeschweißt sind. Vorzugsweise kann der Batteriemodul-Stack in Längsrichtung nicht unterbrochen sein. Die einzelnen Batteriemodule können vorzugsweise durchgängig hintereinander angeordnet sein.

Der Begriff Fahrzeug meint vorliegend ein Hybrid-Fahrzeug mit einem elektrischen und fossilen Antriebstrang oder ein rein elektrisches Fahrzeug mit lediglich einem elektrischen Antriebstrang.

Der Begriff Seitenschweller meint vorliegend einen Schweller einer Fahrzeugkarosserie.

Der Begriff Bodenelement meint vorliegend ein strukturelles flächiges Bauteil, das eingerichtet ist, die vier Batteriemodul-Stacks in vertikaler Richtung nach unten gegenüber einer Umgebung einzuhausen. Das Bodenelement kann einteilig oder mehrteilig ausgeführt sein. Das Bodenelement kann als Material Metall und/oder Kunststoff umfassen. Das Bodenelement kann vorzugsweise mit den Seitenschwellern verbunden sein. Das Bodenelement kann vorzugsweise mit den Seitenschwellern verschraubt sein.

Der Begriff Deckelelement meint vorliegend ein strukturelles flächiges Bauteil, das eingerichtet ist, die vier Batteriemodul-Stacks in vertikaler Richtung nach oben gegenüber einer Umgebung einzuhausen. Das Deckelelement kann einteilig oder mehrteilig ausgeführt sein. Das Bodenelement kann als Material Metall und/oder Kunststoff umfassen. Das Deckelelement kann vorzugsweise mit den Seitenschwellern verbunden sein. Das Deckelelement kann vorzugsweise mit den Seitenschwellern verschraubt sein. Das Deckelelement kann vorzugsweise den Fahrgastraum in vertikaler Richtung nach unten begrenzen. Alternativ kann ein Unterbodenelement einen Fahrgastraum in vertikaler Richtung nach unten abgrenzen.

Der Begriff Längsrichtung meint vorliegend die Fahrrichtung des Fahrzeugs. Der Begriff Längsrichtung meint die x-Richtung des Fahrzeugs.

Der Deformationsfreiraum meint vorliegend einen Raum, der nicht durch die Batteriemodul-Stacks belegt ist. Der Deformationsfreiraum kann sich vorliegend zumindest über eine axiale Erstreckungslänge in Längsrichtung der Batteriemodul-Stacks erstrecken. Der Deformationsfreiraum kann mit einer Struktur gefüllt sein, die das Deformationsverhalten bei einem Seitencrash vorteilhaft beeinflusst. Der Deformationsfreiraum kann vorzugsweise seitlich in Querrichtung des Fahrzeugs jeweils von einem Batterie-Stack-Modul begrenzt werden. Der Deformationsfreiraum kann vorliegend vorzugsweise in vertikaler Richtung bzw. Hochrichtung unten durch das Bodenelement und oben durch das Deckelelement begrenzt werden.

Der Offenbarung liegt die Erkenntnis zugrunde, dass Batteriemodul-Stacks innerhalb des Batteriegehäuses angeordnet werden. Aufgrund von Anforderungen bei Seitenaufprallen werden in der Regel Querwände innerhalb der Einhausung angeordnet. Diese Querwände unterbrechen die Batteriemodul-Stacks in Längsrichtung. Die Querwände benötigen Bauraum und reduzieren somit die Packungsdichte bzw. Leistungsdichte bzw. Energiedichte innerhalb der Hochvolt-Batterie-Anordnung. Die Offenbarung löst diese Problematik, indem sie einen Deformationsfreiraum mittig zwischen dem zweiten und dritten Batterie-Stack-Modul anordnet und eine Längs-Sicke innerhalb des Bodenelements.

Der Deformationsfreiraum in der Mitte führt zwangsläufig zu einer engeren Anordnung von seitlichen Batterie-Stack-Modulen an den Seitenschwellern. Dies begünstigt das Crash-Verhalten, da bei einem Seitencrash die Bewegung der beiden linken Batteriemodul-Stacks an dem linken Seitenschweller bei Aufprall am linken Seitenschweller gestoppt wird oder die Bewegung der beiden rechten Batteriemodul-Stacks an dem rechten Seitenschweller bei Aufprall am rechten Seitenschweller gestoppt wird und so jeweils Bewegungsenergie aus dem System genommen wird. Die jeweiligen anderen beiden Batteriemodul-Stacks führen dann zunächst zu einer Verformung des Deformationsfreiraums. Auf diese Weise kann insgesamt eine sichere und gleichzeitig leistungsstarke Hochvolt-Batterie-Anordnung bereitgestellt werden.

In anderen Worten ausgedrückt, ist bei der der Anordnung von prismatischen Zellen in parallelen Stacks in Fahrzeuglängsrichtung die lange Körperkante der Zelle in Richtung Seitencrash ausgerichtet. In dieser Belastungsrichtung hat die Zelle ein kritisches Verformungsniveau, das nicht überschritten werden darf. Bei der Verformung nimmt die Zelle mechanische Energie auf. Die Offenbarung schlägt vor, dass der Seitenschweller durch Energieaufnahme beim primären Anprall die Belastung der Zellen infolge der Verzögerung begrenzt. Die Zelle bzw. der Batteriemodul-Stack absorbiert im Folgenden die eigene kinetische Restenergie. Durch die Schaffung eines Deformationsfreiraums mittig zwischen dem zweiten Batteriemodul-Stack und dem dritten Batteriemodul-Stack kann ein Deformationsweg innerhalb der Hochvolt-Batterie-Anordnung geschafft werden. Hierzu können die äußeren Batteriemodul-Stacks näher an die Seitenschweller angeordnet werden. Hierbei gilt: Durch jede Verschiebung der äußeren Batteriemodul-Stacks um einen Betrag x in Richtung der Seitenschweller kann der doppelte Betrag x als Deformationsweg mittig gewonnen werden. Die Batteriemodul-Stacks auf der crashabgewandten Fahrzeugseite können ihre kinetische Energie innerhalb des Deformationsbereichs bzw. des Deformationswegs umsetzen, ohne dabei die stoßzugewandten Batteriemodul-Stacks zu belasten. Dadurch kann effektiv eine Masseentkopplung innerhalb der Hochvolt-Batterie-Anordnung bzw. des Gehäuses für die Hochvolt-Batterie-Anordnung geschaffen werden. Die gezielte Triggerung der Deformation innerhalb des Deformationsbereichs kann durch die Längs-Sicke vorteilhaft unterstützt werden.

Auf diese Weise können vorteilhaft Gewicht und Kosten bei gleicher Crashperformance eingespart werden. Die Struktur der Seitenschweller kann leichter ausgeführt werden, da die Geschwindigkeit nur bis zur Grenzgeschwindigkeit des ersten Batteriemodul-Stacks reduziert werden muss. Das Konzept ist vorteilhaft auf Cell-to-Pack-Konzepte und Cell-to-Car-Konzepte anwendbar.

Vorzugweise kann das Bodenelement im Bereich des Deformationsfreiraums eine Längs-Sicke zur Beeinflussung einer Deformation aufweisen.

Der Begriff Längs-Sicke meint vorliegend eine Sicke, die in Längsrichtung angeordnet ist und die eingerichtet ist, bei einer Querlast, beispielsweise in Folge eines Seitencrashs, gezielt nachzugeben, sodass die Querlastenergie innerhalb des Deformationsbereichs zunächst zumindest teilweise durch Verformung verbraucht wird. Die Längs-Sicke kann sich vorzugsweise in Längsrichtung über die gesamte Erstreckungslänge des Deformationsfreiraums erstrecken. Die Längs-Sicke kann durchgängig oder unterbrochen sein. Alternativ kann im Bodenbereich auch eine Art der geometrischen Schwächung vorliegen.

Die Längs-Sicke begünstigt vorteilhaft die Verformung des Deformationsfreiraums. Dadurch kann vorteilhaft eine Verformung der Batteriemodule vermieden bzw. minimiert werden. Die Crash-Energie kann so vorteilhaft durch die Verformung des Deformationsfreiraums abgebaut werden.

Vorzugsweise kann die Hochvolt-Batterie-Anordnung weiter ein Unterbodenelement zur Begrenzung eines Fahrgastraums umfassen, wobei das Unterbodenelement oberhalb des Deckelelements angeordnet ist.

Der Begriff Unterbodenelement meint vorliegend ein strukturelles flächiges Element, das den Fahrgastraum in vertikaler Richtung nach unten abgrenzt. Das Unterbodenelement kann einteilig oder mehrteilig sein. Das Unterbodenelement kann als Material Metall und/oder Kunstostoff umfassen.

Das Unterbodenelement kann vorteilhaft zu einer einfacheren Ausgestaltung des Deckelelements beitragen.

Gemäß einer bevorzugten Ausführungsform kann die Hochvolt-Batterie-Anordnung weiter eine Erhebung zur Beeinflussung der Deformation umfassen, wobei sich die Erhebung in Längsrichtung erstrecken und innerhalb des Deckelelements oder innerhalb des Unterbodenelements angeordnet sein kann.

Vorzugsweise kann die Erhebung im Bereich des Deformationsfreiraums angeordnet sein. Vorzugsweise kann die Erhebung eine Längserstreckung aufweisen, die zumindest einer Längserstreckung der Batteriemodul-Stacks entspricht. Die Erhebung kann beispielsweise eine prismatische Kontur, eine trapezförmige Kontur oder eine Bogenkontur aufweisen. Die Erhebung meint vorliegend eine Art Tunnel. Die Erhebung kann vorteilhaft das Deformationsverhalten beeinflussen. Auf diese Weise kann gezielt die Deformation in den Bereich des Deformationsfreiraums konzentriert werden.

Vorzugsweise kann die Erhebung eingerichtet sein, zwischen einem ersten Teil eines Sitzquerträgers und einem zweiten Teil des Sitzquerträgers angeordnet zu sein, sodass eine Querlast in einem Seiten-Crashfall zunächst über die Erhebung verläuft.

Mit anderen Worten ausgedrückt, unterbricht die Erhebung den Kraftfluss über die beiden Teile des Sitzquerträgers. Der Sitzquerträger ist demnach geteilt aufgebaut. Erst nachdem sich die Erhebung durch den Seitencrash-Fall zusammengeschoben hat, liegend die beiden Teile des Sitzquerträgers aneinander, sodass die Querlast über diese verläuft. Die Erhebung kann vorliegend von einem Sitzquerträger gegen den anderen Sitzquerträger geschoben und gestaucht bzw. gequetscht werden, bis beide Sitzquerträger mittelbar oder unmittelbar so aneinander liegen, dass ein Kraftfluss von einem Teil auf den anderen Teil verläuft. Erst wenn die mittige Deformationszone bzw. der Deformationsweg aufgebraucht sind, kommen die Teile des Sitzquerträgers in Kontakt, und es bildet sich ein Lastpfad über die Fahrzeugbreite.

Auf diese Weise kann vorteilhaft das Deformationsverhalten so eingestellt werden, dass zunächst der Deformationsraum gestaucht wird, um Deformationsenergie abzubauen. So kann eine Deformation der Batteriemodule vermieden bzw. verringert werden.

Vorzugsweise kann die Erhebung eine Quererstreckung in einem Bereich von 0,8 bis 1,2 einer Quererstreckung des Deformationsfreiraums aufweisen.

Vorzugsweise kann eine Erhebung eine Querstreckung aufweisen, die einer Querstreckung des Deformationsfreiraums entspricht.

Auf diese Weise kann vorteilhaft das Deformationsverhalten begünstigt werden.

Vorzugsweise kann die Hochvolt-Batterie-Anordnung weiter ein erstes Deformationseinlegeelement zur Beeinflussung der Deformation umfassen, wobei das erste Deformationseinlegeelement innerhalb der Erhebung angeordnet sein kann.

Das Deformationseinlegeelement kann mit dem Deckelelement und/oder dem Unterbodenelement vorzugsweise über eine oder mehrere Verbindungsstellen verbunden sein. Vorzugsweise können die Verbindungstellen punktförmig ausgeführt sein. Vorzugsweise kann die Verbindung über eine Verschraubung oder Verklebung erfolgen.

Vorzugsweise kann das erste Deformationseinlegeelement eine Wabenstruktur aufweisen. Die Wabenstruktur kann eine hexagonale Wabe umfassen. Die Wabenachse kann in Richtung der Fahrzeughochachse gerichtet sein. Dadurch kann der Deformationsfreiraum bzw. das Deformationseinlegeelement ausreichend steif gestaltet sein, um Durchschraubpunkte zwischen Bodenelement und Erhebung zu realisieren.

Die Wabenstruktur kann vorteilhaft die Crashenergie absorbieren. Die Wabenstruktur kann vorteilhaft das Kraftniveau des Deformationsbereichs einstellen.

Vorzugsweise kann das erste Deformationseinlegeelement mit dem Deckelelement und Bodenelement verschraubt sein, wobei das erste Deformationseinlegeelement mit dem Unterbodenelement und dem Deckelelement verschraubt sein kann.

Durch die Schraubverbindung kann auf einfache Weise eine Kraftübertragung realisiert werden.

Vorzugsweise kann die Hochvolt-Batterie-Anordnung weiter ein
zweites Deformationseinlegeelement zur Beeinflussung der Deformation umfassen, wobei insbesondere das zweite Deformationseinlegeelement innerhalb des Deformationsfreiraums angeordnet sein kann, wobei insbesondere das zweite Deformationseinlegeelement eine Wabenstruktur aufweisen kann.

Das zweite Deformationseinlegeelement kann einteilig oder mehrteilig sein. Das zweite Deformationseinlegeelement kann eine axiale Längserstreckung aufweisen, die in etwa einer axialen Längserstreckung des Batteriemodul-Stacks entspricht. Das zweite Deformationseinlegeelement kann vorzugsweise mit dem Bodenelement und/oder dem Deckelelement und/oder dem Unterbodenelement verschraubt oder verklebt sein.

Vorzugsweise kann das zweite Deformationseinlegeelement eine Wabenstruktur aufweisen. Die Wabenstruktur kann eine hexagonale Wabe umfassen. Die Wabenachse kann in Richtung der Fahrzeughochachse gerichtet sein. Dadurch kann der Deformationsfreiraum bzw. das Deformationseinlegeelement ausreichend steif gestaltet sein, um Durchschraubpunkte zwischen Bodenelement und Erhebung zu realisieren.

Die Wabenstruktur kann vorteilhaft die Crashenergie absorbieren. Die Wabenstruktur kann vorteilhaft das Kraftniveau des Deformationsbereichs einstellen.

Das zweite Deformationseinlegeelement kann vorteilhaft die Crashenergie absorbieren.

Vorzugsweise kann die Hochvolt-Batterie-Anordnung weiter zumindest eine erste Längsstruktur umfassen, wobei die zumindest eine Längsstruktur zwischen einem ersten Batteriemodul-Stack und einem zweiten Batteriemodul-Stack der vier Batteriemodul-Stacks angeordnet sein kann, und/oder wobei die Hochvolt-Batterie-Anordnung zumindest eine zweite Längsstruktur umfasst, wobei die eine zweite Längsstruktur zwischen einem dritten Batteriemodul-Stack und einem vierten Batteriemodul-Stack der vier Batteriemodul-Stacks angeordnet sein kann.

Die erste Längsstruktur und zweite Längsstruktur können vorzugsweise durchgehend ausgeführt sein. Die erste Längsstruktur und zweite Längsstruktur können vorzugsweise eine Wabenstruktur aufweisen, die eingerichtet ist, in Querrichtung nachgiebig zu sein und in Längsrichtung und/oder Hochrichtung steif zu sein. Die Längsstruktur kann vorteilhaft zwei Batteriemodul-Stacks voneinander abschotten. Die Längsstruktur kann vorteilhaft einen Hilfsrahmen bei einem Frontalcrash abstützen.

Auf diese Weise kann vorteilhaft das Deformationsverhalten der Hochvolt-Batterie-Anordnung verbessert werden.

Ein weiterer Aspekt der Offenbarung betrifft ein Fahrzeug mit einer oben näher beschriebenen Hochvolt-Batterie-Anordnung. Das Fahrzeug weist die gleichen Vorteile auf, wie sie ausführlich zu der Hochvolt-Batterie-Anordnung gemäß dem ersten Aspekt der Erfindung beschrieben werden.

Weitere Vorteile, Merkmale und Einzelheiten der Offenbarung ergeben sich aus der nachfolgenden Beschreibung, in der unter Bezugnahme auf die Zeichnungen mehrere Ausführungsbeispiele der Offenbarung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen jeweils schematisch:
- Figur 1: eine Hochvolt-Batterie-Anordnung,
- Figur 2: eine weitere Hochvolt-Batterie-Anordnung und
- Figur 3: ein Fahrzeug.

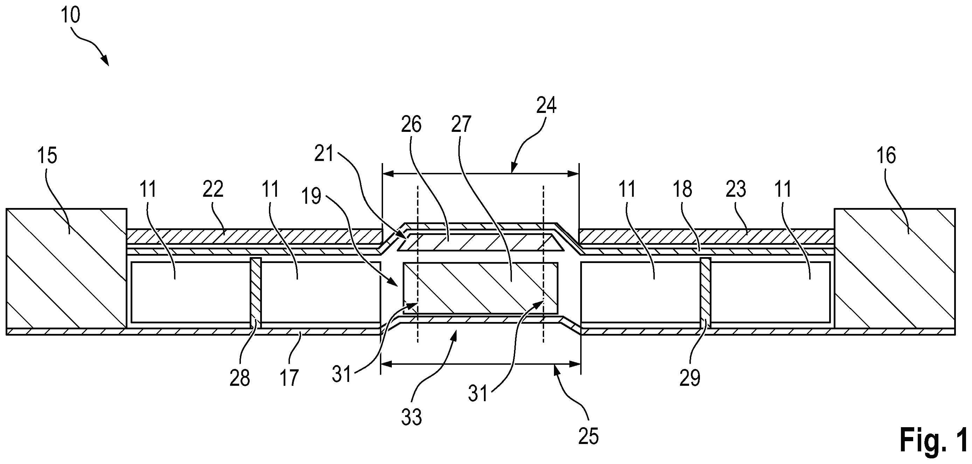

Fig. 1 zeigt eine Hochvolt-Batterie-Anordnung 10 in einer Schnittansicht. Die Schnittansicht liegt auf einer Ebene, die in Querrichtung und Hochrichtung des Fahrzeugs 100 verläuft. Die Hochvolt-Batterie-Anordnung 10 umfasst vorliegend
vier Batteriemodul-Stacks 11, 12, 13 und 14. Die Batteriemodul-Stacks 11, 12, 13 und 14 sind in Längsrichtung 30 des Fahrzeugs angeordnet. Die Hochvolt-Batterie-Anordnung 10 umfasst zwei Seitenschweller 15 und 16. Die vier Batteriemodul-Stacks 11, 12, 13 und 14 sind zwischen den beiden Seitenschwellern 15 und 16 angeordnet, sodass sich ein Deformationsfreiraum 19 zwischen dem Batteriemodul-Stack 12 und dem Batteriemodul-Stack 13 bildet. Die Batteriemodul-Stacks werden in vertikaler Richtung nach unten von einem Bodenelement 17 eingehaust. Die Batteriemodul-Stacks werden in vertikaler Richtung nach oben von einem Deckelelement 18 eingehaust. Das Bodenelement 17 weist im Bereich des Deformationsfreiraums 19 eine Längs-Sicke 33 zur Beeinflussung der Deformation auf. Weiterhin ist im Deformationsfreiraum vorliegend ein zweites Deformationseinlegeelement 27 angeordnet. Das zweite Deformationseinlegeelement 27 weist eine Wabenstruktur zur Beeinflussung der Deformation auf. Das zweite Deformationseinlegeelement 27 ist vorliegend mit dem Bodenelement 17 und dem Deckelelement 18 über die Schraubpunkte 31 verschraubt. Weiterhin weist das Deckelelement 18 eine trapezförmige Erhebung 21 auf, in der ein erstes Deformationseinlegeelement 26 angeordnet ist. Das erste Deformationseinlegeelement 26 weist eine Wabenstruktur zur Beeinflussung der Deformation auf. Das erste Deformationseinlegeelement 26 ist über die Schraubpunkte 31 mit dem Deckelelement 18 und dem Bodenelement 17 verschraubt. Weiterhin sind vorliegend zwischen dem ersten Batteriemodul-Stack 11 und dem zweiten Batteriemodul-Stack 12 sowie zwischen dem dritten Batteriemodul-Stack 13 und dem vierten Batteriemodul-Stack 14 jeweils Längsstrukturen 28 und 29 angeordnet. Die Längsstrukturen können vorzugsweise eine Wabenstruktur zur Beeinflussung des Deformationsverhaltens aufweisen. Die Quererstreckung 25 des Deformationsfreiraums entspricht in etwa der Querstreckung 24 der Erhebung. Die Erhebung 21 ist zwischen dem ersten Teil 22 des Sitzquerträgers und dem zweiten Teil des Sitzquerträgers 23 angeordnet und unterbricht diesen. Im Seitencrashfall verformen sich zunächst der Deformationsfreiraum 19 und die Erhebung 21 samt Deformationseinlegelementen 26, 27, bevor die beiden Teile 22, 23 des Sitzquerträgers aufeinander geschoben werden und dann die Querlast weiter übertragen. Auf diese Weise kann vorteilhaft die Crash-Energie aufgebraucht werden. Die Batteriemodul-Stacks 11, 12, 13 und 14 sind vorliegend über Aufnahmen (nicht gezeigt) mit den Seitenschwellern 15, 16 und/oder den Längsstrukturen 28, 29 und/oder dem Bodenelement 17 verbunden, beispielsweise verklebt.

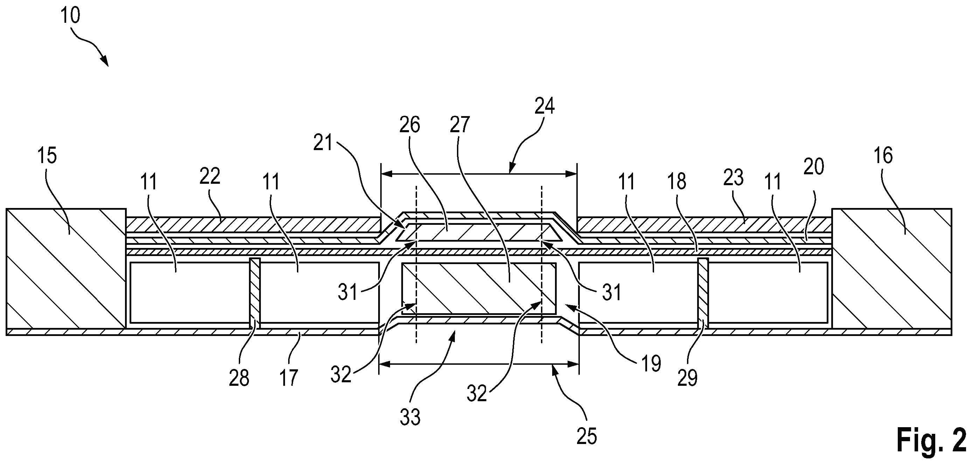

Fig. 2 zeigt eine weitere Hochvolt-Batterie-Anordnung 10. Im Gegensatz zu Fig. 1 umfasst die Hochvolt-Batterie-Anordnung 10 vorliegend weiter ein Unterbodenelement 20. Im Gegensatz zu Fig. 1 ist die Erhebung 21 vorliegend im Unterbodenelement 20 angeordnet. Das erste Deformationseinlegelement 26 ist vorliegend mit dem Unterbodenelement 20 und dem Deckelelement 18 über die Schraubpunkte 31 verschraubt. Das zweite Deformationseinlegelement 27 ist vorliegend mit dem Deckelelement 18 und dem Bodenelement 17 über die Schraubpunkte 32 verschraubt.

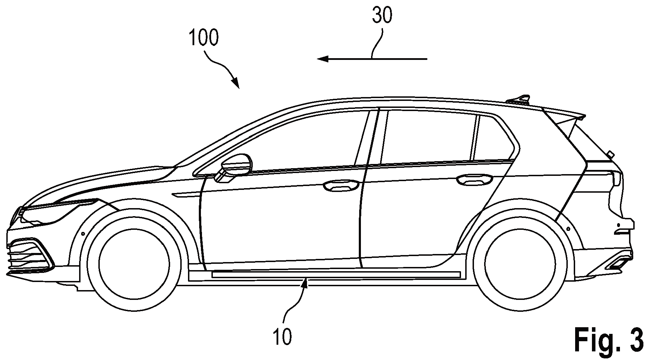

Fig. 3 zeigt ein Fahrzeug 100 mit einer Hochvolt-Batterie-Anordnung 10. Das Fahrzeug 100 umfasst vorliegend zumindest einen Sitzquerträger, der einen ersten Teil 22 und einen zweiten Teil 23 aufweist, wobei zwischen dem ersten Teil 22 und dem zweiten Teil 23 eine Erhebung 21 der Hochvolt-Batterie-Anordnung 10 angeordnet ist.

### Bezugszeichenliste

- 10: Hochvolt-Batterie-Anordnung/
- 11, 12, 13, 14: Batteriemodul-Stack
- 15, 16: Seitenschweller
- 17: Bodenelement
- 18: Deckelelement
- 19: Deformationsfreiraum
- 20: Unterbodenelement
- 21: Erhebung
- 22: erstes Teil Sitzquerträger
- 23: zweites Teil Sitzquerträger
- 24: Quererstreckung Erhebung
- 25: Quererstreckung Deformationsfreiraum
- 26: erstes Deformationseinlegeelement
- 27: zweites Deformationseinlegeelement
- 28, 29: Längsstruktur
- 30: Längsrichtung
- 31: Schraubpunkte
- 32: Schraubpunkte
- 33: Längssicke

- 100: Fahrzeug

## Patentansprüche

1. Hochvolt-Batterie-Anordnung (10) für ein Fahrzeug, umfassend
zumindest vier Batteriemodul-Stacks (11, 12, 13, 14),
zwei Seitenschweller (15, 16),
ein Bodenelement (17) und
ein Deckelelement (18),
wobei die zumindest vier Batteriemodul-Stacks (11, 12, 13, 14) parallel zueinander in Längsrichtung (30) zwischen den zwei Seitenschwellern (15, 16), dem Bodenelement (17) und dem Deckelelement (18) so angeordnet sind, dass ein Deformationsfreiraum (19) mittig zwischen den zwei Seitenschwellern (15, 16) zur Absorbierung einer Deformationsenergie gebildet wird.

2. Hochvolt-Batterie-Anordnung (10) nach Anspruch 1,
wobei das Bodenelement (17) im Bereich des Deformationsfreiraums (19) eine Längs-Sicke (33) zur Beeinflussung einer Deformation aufweist.

3. Hochvolt-Batterie-Anordnung (10) nach Anspruch 1 oder 2,
weiter umfassend ein Unterbodenelement (20) zur Begrenzung eines Fahrgastraums, wobei das Unterbodenelement (20) oberhalb des Deckelelements (18) angeordnet ist.

4. Hochvolt-Batterie-Anordnung (10) nach einem der vorherigen Ansprüche,
weiter umfassend eine Erhebung (21) zur Beeinflussung der Deformation, wobei sich die Erhebung in Längsrichtung erstreckt und innerhalb des Deckelelements (18) oder innerhalb des Unterbodenelements (20) angeordnet ist.

5. Hochvolt-Batterie-Anordnung (10) nach Anspruch 4,
wobei die Erhebung (21) eingerichtet ist, zwischen einem ersten Teil (22) eines Sitzquerträgers und einem zweiten Teil (23) des Sitzquerträgers angeordnet zu werden, sodass eine Querlast in einem Seiten-Crashfall zunächst über die Erhebung (21) verläuft.

6. Hochvolt-Batterie-Anordnung (10) nach Anspruch 4 oder 5,
wobei die Erhebung (21) eine Quererstreckung (24) in einem Bereich von 0,8 bis 1,2 einer Quererstreckung (25) des Deformationsfreiraums (19) aufweist.

7. Hochvolt-Batterie-Anordnung (10) nach einem der Ansprüche 4 bis 6,
weiter umfassend ein erstes Deformationseinlegeelement (26) zur Beeinflussung der Deformation, wobei das erste Deformationseinlegeelement (26) innerhalb der Erhebung (21) angeordnet ist.

8. Hochvolt-Batterie-Anordnung (10) nach Anspruch 7,
wobei das erste Deformationseinlegeelement (26) eine Wabenstruktur aufweist.

9. Hochvolt-Batterie-Anordnung (10) nach Anspruch 7 oder 8, wobei das erste Deformationseinlegeelement (26) mit dem Deckelelement (18) und dem Bodenelement (17) oder mit dem Unterbodenelement (20) und dem Deckelelement (18) verschraubt ist.

10. Hochvolt-Batterie-Anordnung (10) nach einem der vorherigen Ansprüche,
weiter umfassend ein zweites Deformationseinlegeelement (27) zur Beeinflussung der Deformation, wobei das zweite Deformationseinlegeelement (27) innerhalb des Deformationsfreiraums (19) angeordnet ist, wobei insbesondere das zweite Deformationseinlegeelement (27) eine Wabenstruktur aufweist.

11. Hochvolt-Batterie-Anordnung (10) nach einem der vorherigen Ansprüche, wobei zumindest eine Längsstruktur (28) zwischen einem ersten Batteriemodul-Stack (11) und einem zweiten Batteriemodul-Stack (12) der vier Batteriemodul-Stacks (11, 12, 13, 14) angeordnet ist, und/oder wobei eine Längsstruktur (29) zwischen einem dritten Batteriemodul-Stack (13) und einem vierten Batteriemodul-Stack (14) der vier Batteriemodul-Stacks (11, 12, 13, 14) angeordnet ist.

12. Fahrzeug (100), mit einer Hochvolt-Batterie-Anordnung (10) nach einem der Ansprüche 1 bis 11.
